(19) **Europäisches Patentamt European Patent Office Office européen des brevets**

(11) **EP 4 572 123 A1**

(12) **EUROPEAN PATENT APPLICATION**

(43) Date of publication:
  **18.06.2025 Bulletin 2025/25**

(51) International Patent Classification (IPC):
  **H02P 6/18** (2016.01)   **H02P 29/02** (2016.01)
  **H02P 6/21** (2016.01)

(21) Application number: **23216523.3**

(22) Date of filing: **14.12.2023**

(52) Cooperative Patent Classification (CPC):
  **H02P 6/182; H02P 6/21; H02P 29/024**

(84) Designated Contracting States:
  **AL AT BE BG CH CY CZ DE DK EE ES FI FR GB GR HR HU IE IS IT LI LT LU LV MC ME MK MT NL NO PL PT RO RS SE SI SK SM TR**
  Designated Extension States:
  **BA**
  Designated Validation States:
  **KH MA MD TN**

(71) Applicant: **Melexis Technologies NV**
  **3980 Tessenderlo (BE)**

(72) Inventors:
  • **MOONS, Marnix**
    **3980 Tessenderlo (BE)**
  • **BRAAT, Marcel**
    **3980 Tessenderlo (BE)**
  • **LAMBRECHTS, Marc**
    **3980 Tessenderlo (BE)**

(74) Representative: **Winger**
  **Mouterij 16 bus 101**
  **3190 Boortmeerbeek (BE)**

(54) **STALL DETECTION OF A BLDC MOTOR**

(57)  The invention relates to stall detection of a BLDC motor comprising one or more motor phases for each motor phase a phase inductance L, and a phase resistance R. A driver (213, 230) is configured for driving (110) the BLDC motor (220) by applying a voltage or a current vector to one or more motor phases of the BLDC motor (220) with a rotation speed ω of the voltage vector or the current vector; a detector (212) is configured for obtaining (120) an electric angle between the applied voltage vector and a resulting current vector or between the applied current vector and a resulting voltage vector; a processing device (211) is configured for determining a stall of the rotor if the absolute value of the electric angle or a filtered version thereof crosses a stall threshold value wherein the stall threshold value is *arctan2(ωL, R)* plus or minus a predefined margin.

**FIG. 2**

EP 4 572 123 A1

## Description

## Field of the invention

The invention relates to the field of stall detection of a brushless direct current (BLDC) motor. More specifically it relates to a method or a device for sensorless stall detection of the BLDC motor.

## Background of the invention

When running a BLDC motor, by applying a voltage vector or a current vector to one or more motor phases of the BLDC motor, it is important to know if the motor suddenly stops running (stall). This can for example be caused by an increase in mechanical load or the motor not being able to follow the applied current vector or voltage vector. When this stall is not detected, energy will be wasted and the application driven by the motor will be malfunctional. When the stall is detected correctly, it can safely be handled (e.g. by restarting or stopping the application).

The conventional solution to determine a stall is by using a positional sensor (e.g. Hall sensor) for determining the position of the rotor of the motor. A sudden stop of the rotor is clearly visible in the sensor data. This conventional method is very reliable, but has a downside of having the additional cost of the sensor. There is therefore a need for sensorless stall detection methods and devices.

Other conventional solutions look at sudden current increases or back electromotive force (BEMF) drops. These methods do not require a positional sensor, but are only reliable at higher operating speeds.

There is a need for alternative sensorless stall detection methods and devices which advantageously can be used at lower operation speeds than sensorless methods and devices which are monitoring the BEMF for determining stall of the rotor.

## Summary of the invention

It is an object of embodiments of the present invention to provide a good device and method to detect stall of a BLDC motor.

The above objective is accomplished by a method and device according to the present invention.

In a first aspect embodiments of the present invention relate to a method for detecting stall of a rotor of a BLDC motor. The BLDC motor comprising one or more motor phases with $\omega L$ an imaginary part, and R a real part of each motor phase. The method comprises:

- driving the brushless DC motor by applying a voltage vector or a current vector to one or more motor phases of the brushless DC motor, for rotating said rotor,
- obtaining an electric angle between the applied voltage vector and a resulting current vector of the one or more motor phases or between the applied current vector and a resulting voltage vector of the one or more motor phases,
- indicating a stall of said rotor if the absolute value of the electric angle or a filtered version thereof crosses a stall threshold value wherein the stall threshold value is $arctan2(\omega L, R)$ plus or minus a predefined margin.

It is an advantage of embodiments of the present invention that stall can be detected without using a position sensor. It is an advantage of embodiments of the present invention, that stall can be detected at low speed operation compared to methods which use the BEMF voltage for determining if the rotor is stalling.

It is an advantage of embodiments of the present invention that the applied vector for rotating the rotor may be such that it results in a constant speed, an accelerating speed, or a decelerating speed. In all these cases the method in accordance with embodiments of the present invention allows to detect stall of the rotor.

In embodiments of the present invention a stall of said rotor is indicated if the absolute value of the electric angle or a filtered version thereof becomes smaller than the stall threshold value.

It is an advantage of embodiments of the present invention that stall can be detected by a simple comparison of the electric angle with a stall threshold value.

In embodiments of the present invention the predefined margin is a positive value between 0 and 50% of the $arctan2(\omega L, R)$.

It is an advantage of embodiments of the present invention that the stall threshold value can be adjusted to compensate for measurement noise, vibration during stall, or motor variations.

In embodiments of the present invention a stall of said rotor is indicated if the absolute value of the electric angle or a filtered version thereof is within a range defined by $arctan2(\omega L, R)$ plus/minus the predefined margin. In that case the predefined margin may for example be a positive value between 0.1 and 50% of the $arctan2(\omega L, R)$.

In embodiments of the present invention the motor is driven in an open loop manner.

In embodiments of the present invention the motor is driven such that, while the rotor is rotating, the absolute version of the electric angle or a filtered version thereof is larger than the stall threshold value.

In embodiments of the present invention the method comprises an enabling step when starting the motor. During this step the absolute value of the electrical angle or a filtered version thereof is compared with an enable threshold value. The indicating of a stall of said rotor is only enabled when the absolute value of the electrical angle or a filtered version thereof is larger than the enable threshold value. The enable threshold value is larger than the stall threshold value.

Alternatively, in embodiments of the present invention the enabling step may enable stall detection when the driving speed $\omega$ exceeds a predetermined threshold.

In embodiments of the present invention the method comprises stopping the driving of the brushless DC motor if stall is indicated.

In embodiments of the present invention stall may be indicated to a higher level system.

In embodiments of the present invention the method comprises applying a reduced voltage vector or a reduced current vector during a predefined duration if stall is indicated.

It is an advantage of embodiments of the present invention that the stall can be handled by applying a reduced voltage vector or a reduced current vector. In embodiments of the present invention the polarity of the volage vector or current vector which is applied during a predefined duration when stall is indicated may even have an inverse polarity compared to the polarity used when driving the brushless DC motor. It is an advantage of embodiments of the present invention that the stall can be handled by temporarily applying a voltage vector or a current vector with inverse polarity.

In a second aspect embodiments of the present invention relate to a stall detector for detecting stall of a brushless DC motor comprising one or more motor phases with $\omega L$ an imaginary part, and R a real part of each motor phase.

the stall detector comprises:

- a driver configured for driving the brushless DC motor by applying a voltage vector or a current vector to one or more motor phases of the brushless DC motor, for rotating said rotor,
- a detector configured for obtaining an electric angle between the applied voltage vector and a resulting current vector of the one or more motor phases or between the applied current vector and a resulting voltage vector of the one or more motor phases,
- a processing device configured for determining a stall of said rotor if the absolute value of the electric angle or a filtered version thereof crosses a stall threshold value wherein the stall threshold value is $arctan2(\omega L, R)$ plus or minus a predefined margin and for indicating said stall if stall is determined.

In embodiments of the present invention the processing device is configured for determining a stall of said rotor if the absolute value of the electric angle or a filtered version of the electric angle becomes smaller than the stall threshold value.

In embodiments of the present invention the processing device is configured for determining a stall of said rotor if the absolute value of the electric angle or a filtered version thereof is within a range defined by $arctan2(\omega L, R)$ plus/minus the predefined margin.

In embodiments of the present invention the driver is configured for driving the motor in an open loop manner.

In embodiments of the present invention the driver is configured for driving the motor such that, while the rotor is rotating, the absolute value of the electric angle or a filtered version thereof is larger than the stall threshold value.

In embodiments of the present invention the determining of a stall of said rotor by the processing device is enabled when starting the motor. The processing device may therefore be configured for comparing the absolute value of the electrical angle or a filtered version thereof with an enable threshold value and for enabling the indicating of a stall of said rotor when the absolute value of the electrical angle or a filtered version thereof is larger than the enable threshold value wherein the enable threshold value is larger than the stall threshold value.

Alternatively, in embodiments of the present invention processing device is configured for enabling the determining of a stall of said rotor, when starting the motor, when the driving speed $\omega$ exceeds a predetermined threshold.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 shows a flow chart of an exemplary method in accordance with embodiments of the present invention.

FIG. 2 shows a block diagram of an exemplary stall detector in accordance with embodiments of the present invention.

FIG. 3 shows the vector representation of the current, the voltage, and the BEMF of a 3-phase motor which is driven in an optimal way.

FIG. 4 shows the electric angle in function of time before and after stall for a motor running at 200 e-rpm.

FIG. 5 shows the electric angle in function of time before and after stall for a motor running at 1000 e-rpm.

FIG. 6 shows the electric angle in function of time during ramp-up.

FIG. 7 shows the electric angle in function of time during ramp-down.

Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a voltage vector, reference is made to a mathematical representation of the voltage applied to or measured from the one or more coils of the motor as a single vector. By applying a voltage vector, the speed and position of the motor can be controlled.

Where in embodiments of the present invention reference is made to a current vector, reference is made to a mathematical representation of the current through the one or more coils of the motor as a single vector. By applying a current vector, the speed and position of the motor can be controlled.

The voltage vector or the current vector may for example be obtained by first applying the Clarke transformation followed by a cartesian to polar conversion.

For a 3 phase motor with phases U, V, W (U, V, W may for example be a voltage or a current on the phases) the Clarke transformation, which is transforming the phases U,V, W to a two dimensional reference frame, may be obtained as follows:

$$x = U$$

$$y = \frac{V - W}{\sqrt{3}}$$

This may be followed by a cartesian to polar conversion to obtain the amplitude and the angle of the of the vector.

$$amplitude = \sqrt{x^2 + y^2}$$

$$angle = atan2(y, x)$$

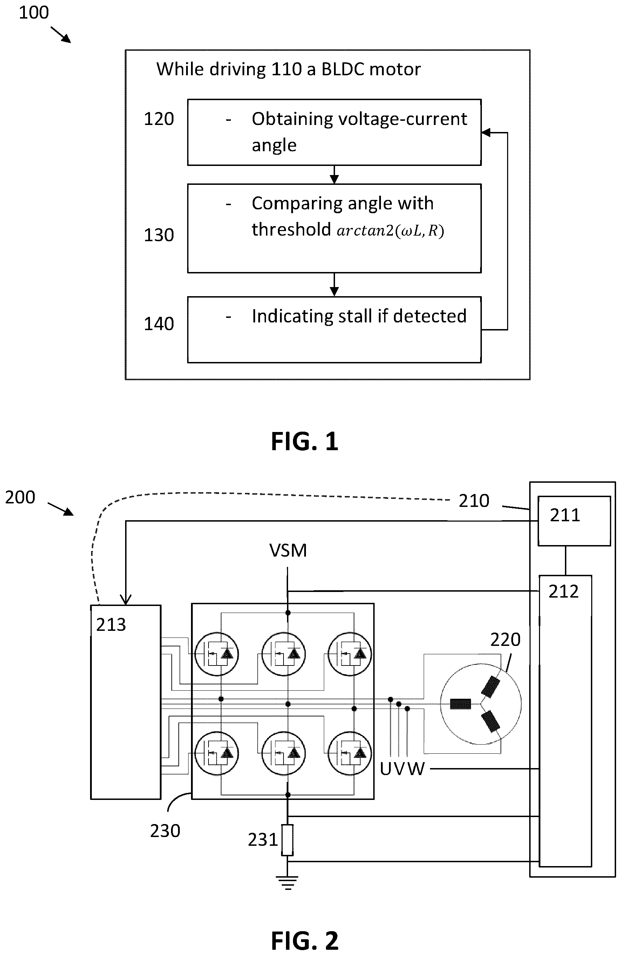

The result is a vector starting at the origin of the reference frame with the calculated amplitude and angle.
In a first aspect embodiments of the present invention relate to a method 100 for detecting stall of a rotor of a BLDC motor 220 and in a second aspect embodiments of the present invention relate to a stall detector 210 for detecting stall of the BLDC motor 220. FIG. 1 shows the a flow chart of an exemplary method in accordance with embodiments of the present invention and FIG. 2 shows a block diagram of motor system 200 comprising an exemplary stall detector 210 in accordance with embodiments of the present invention.
The BLDC motor comprises a rotor and a stator. The BLDC motor 220 may comprise one or more phases on the stator. It may for example comprise one phase, two phases, or three phases or even more phases such as for example 4 or 6 phases. Each motor phase has a phase inductance L and a phase resistance R. Permanent magnets may be present on the rotor.
A method 100 in accordance with embodiments of the present invention comprises driving 110 the BLDC motor 220 by applying a voltage vector or a current vector to one or more motor phases of the BLDC motor. The motor is driven such that the rotor is rotating. The speed of the electrical voltage vector, obtained by applying the voltage vector or the current vector, is $\omega$.
The method 100 comprises obtaining 120 an electric angle between the applied voltage vector and a resulting current vector of the one or more phases or between the applied current vector and a resulting voltage vector of the one or more phases. This is done while the motor is driven 110.
The method 100, furthermore, comprises comparing 130 the absolute value of the electric angle or a filtered version thereof with a stall threshold value and indicating 140 a stall of said rotor if the absolute value of the electric angle or a filtered version thereof crosses the stall threshold value. The stall threshold is determined as $arctan2(\omega L, R)$ plus or minus a predefined margin.
The predefined margin may for example be a positive value between 0 and 50% of the $arctan2(\omega L, R)$, for example between 0 and 40% the $arctan2(\omega L, R)$, for example between 0 and 30% the $arctan2(\omega L, R)$, for example between 0 and 20% the $arctan2(\omega L, R)$, for example between 0 and 10% the $arctan2(\omega L, R)$.

The inventor has considered the following for determining the stall threshold. Suppose the permanent magnets are removed from the BLDC motor, this mimics the rotor standing completely still. In this case, only an RL-series circuit is left on all stator phases. The transfer function of this system with voltage as input and current as output equals:

$$\frac{I(j\omega)}{V(j\omega)} = \frac{1}{R + j\omega L}$$

Which corresponds to following phase shift:

$$\angle I - \angle V = -\angle(R + j\omega L) = -arctan2(\omega L, R)$$

For simplicity, this is transformed to following IV-angle (i.e. the electric angle) which does not have a negative result:

$$IV = \angle V - \angle I = arctan2(\omega L, R)$$

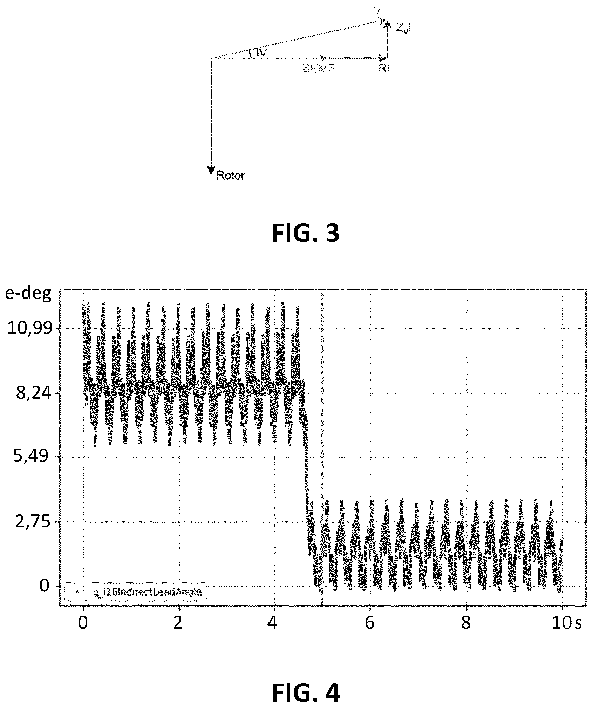

When the rotor is not moving and a rotating voltage vector is applied, the angle between the applied voltage vector and measured current vector is around $arctan2(\omega L, R)$. This value (plus or minus a predefined margin) is a threshold used in embodiments according to the present invention.
In embodiments of the present invention the BLDC motor is driven in a non-optimal way such that the electric angle is larger than $arctan2(\omega L, R)$. The easiest non-optimal drive method is applying a rotating voltage vector in open loop. This voltage vector can be current controlled, resulting in constant current amplitude. A rotating voltage vector may be achieved by applying phase shifted sinusoidal voltages on all phases of the BLDC motor. When the BLDC motor is driven non-optimally and the rotor is stalling, the electric angle or a filtered version thereof will become smaller than the stall threshold value. In that case stall is indicated if the absolute value of the electric angle or a filtered version thereof becomes smaller than the stall threshold value.
In embodiments of the present invention the BLDC motor may be driven in a optimal way. During optimal operation, the current and BEMF vector are aligned as shown in FIG. 3. This figure shows the vector representation of the current, the voltage, and the BEMF of a 3-phase motor. In this figure $Z_y = \omega L$. The according IV-angle (i.e. the electric angle) can be calculated using following formula:

$$IV = arctan\left(\frac{\omega L I}{BEMF + RI}\right)$$

When the motor is running at a low speed $\omega$, $\omega L I$ is small compared to $BEMF + RI$. Looking at FIG. 3 and the formula above, this results in an IV-angle being close to 0. When the motor is driven optimally, the optimal IV-angle is always smaller than the stalled IV-angle. When an optimally driven motor is stalling the absolute value of the electric angle or a filtered version thereof will therefore cross a stall threshold value wherein the stall threshold value is $arctan2(\omega L, R)$ plus or minus the predefined margin.

A non-optimal drive, on the other hand, can be achieved by putting more energy in the motor than required. Increasing the energy above the required energy will result in an increasing IV angle. The higher the current usage, the higher the IV-angle becomes. In embodiments of the present invention the energy can be increased such that, while the rotor is rotating, the IV-angle is always larger than the stall threshold value.

In embodiments of the present invention the motor can be driven optimally, and in that case stall is detected if the absolute value of the electric angle becomes larger than the stall threshold value.

In embodiments of the present invention the motor can be driven non-optimally, and in that case stall is detected if the absolute value of the electric angle becomes smaller than the stall threshold value.

In embodiments the motor may be driven by applying an accelerating voltage vector to the motor until either the desired speed is obtained or the speed is high enough to make a transition to field oriented control (FOC). During this part, the voltage amplitude can be current controlled. For example a constant current can be provided or an increasing current in an open loop manner.

While driving the electric angle between the applied voltage vector and a resulting current vector or between the applied current vector and a resulting voltage vector is obtained.

In embodiments of the present invention the stall detection algorithm is enabled when the difference between the electric angle resulting from the non-optimal drive and the stall threshold value becomes larger than the noise of the electric angle measurement. This may for example already be the case at 0.5% of the maximum motor speed. When the stall detection algorithm is active it will indicate a stall of the rotor when the electric angle or a filtered version thereof crosses the stall threshold. Direct comparison of the electric angle with the stall threshold results in a fast stall detection with barely any loss of position information, filtering of the electric angle before comparison results in a more reliable stall detection at lower speeds.

In embodiments of the present invention a predefined margin the stall threshold may be added to or subtracted from $arctan2(\omega L, R)$. The margin may depend on measurement noise, vibration during stall or motor variations.

In embodiments of the present invention stall may be indicated if the obtained electric angle or a filtered version thereof is within a range defined by $arctan2(\omega L, R)$ plus/minus the predefined margin. In these embodiments the predefined margin is different from zero, for example between 0.1 and 50% of $arctan2(\omega L, R)$.

In embodiments of the present invention the driving 110 of the BLDC motor may be stopped if stall is indicated 140. In embodiments of the present invention a reduced voltage vector or a reduced current vector may be applied during a predefined duration if stall is indicated. In embodiments of the present invention a voltage or current vector with inverse polarity may be applied for removing a detected stall condition.

In embodiments of the present invention the current vector and/or the voltage vector may be obtained by obtaining voltages over the coils of the rotor and/or by measuring currents through the coils of the rotor, and by projecting the currents and/or voltages onto an axis system with at least two axis. In embodiments of the present invention the projection may be a Clarke transformation. Instead of expressing the currents and fluxes for each coil separately they can also be represented in a two-axis system by doing a projection. Such a projection may for example be a Clarke transformation. When doing a Clarke transformation different parameters can be written in a vector representation. The Clarke transformation transforms the phases U, V, W to a two dimensional reference frame.

As discussed before, in case of 3 phases the Clarke transformation may be done with the following formulas: $x = U$; $y = \dfrac{V - W}{\sqrt{3}}$.

In case of 4 phases the Clarke transformation may be done with the following formulas: $x = U - W$; $y = V - T$.

In this example all parameters can be described as a vector referenced to the stator.

The Clarke transformation transforms all three phases to an orthogonal reference frame. Thus all parameters may for example be described as a vector referenced to the stator.

In the block diagram of FIG. 2 a motor system 200, in accordance with embodiments of the present invention, is shown. The motor system 200 comprises a BLDC motor 220, a full bridge driver 230 for driving the BLDC motor, and a stall detector 210, in accordance with embodiments of the present invention, for detecting stall of the BLDC motor 220.

The stall detector 210 comprises a pre-driver 213 configured for driving 110 the brushless DC motor 220 by applying a voltage vector or a current vector to one or more motor phases of the brushless DC motor 220, for rotating said rotor. In the exemplary embodiment in FIG. 3 the pre-driver 213 uses driving signals for controlling the gates of the transistors of the full bridge driver 230 for generating a current through the motor coils of the BLDC motor. The currents may be generated by an average voltage difference over the motor coils generated by the full bridge output driver 230. The driving signals may be pulse width modulated (PWM) signals, or linear controlled signals. The resulting currents through the coils are e.g. sinusoidal currents.

The stall detector 210, moreover, comprises a detector 212 configured for obtaining 120 an electric angle between the applied voltage vector and a resulting current vector of the one or more motor phases or between the applied current vector and a resulting voltage vector of the one or more motor phases. In FIG. 2 this detector is illustrated by the rectangle 212. The voltage vector may be obtained from the supply voltage VSM which is powering the motor. From the supply voltage and the known duty cycle on every phase U, V, W, the voltage applied on every phase may be calculated. This result may be multiplied with a constant factor, which is dependent on the shape of the applied phase voltages (because the star point voltage may not be equal to zero). The supply voltage may be measured or it may be obtained from the voltage supply. Alternatively, the voltages may directly be measured over the coils U, V, W. Measured voltages may for example be related to ground or supply of a reference voltage level. The current vector can for example be determined by measuring a voltage over the summation resistor 231 which is connected between the full bridge driver and the ground. Thus, a current vector can be obtained which represents the flux generated by the currents through the one or more coils of the BLDC motor.

In embodiments of the present invention one or more ADC units may be used for measuring the phase voltage of each phase for obtaining the voltage vector and for measuring the voltage over the summation resistor 231 for obtaining the current vector. If only one ADC is used, it may be multiplexed to different channels. In a preferred embodiment the channels are sample and hold channels in order to ensure that voltage measurements are taken at one and the same time. If several ADCs are used the ADC measurements of the different channels can be synchronized.

The stall detector 210, moreover, comprises a processing device 211 configured for determining a stall of said rotor if the absolute value of the electric angle or a filtered version thereof crosses a stall threshold value wherein the stall threshold value is *arctan2($\omega L$, R)* plus or minus a predefined margin and for indicating said stall. Once stall is detected this may be indicated to the pre-driver 213 which may stop the motor. The full bridge outputs may be put in tri-state, so that high currents through the coils may be avoided. Or, once stall is detected a reduced voltage vector or a reduced current vector may be applied during a predefined duration after receipt of the stall indication. Or the low side transistors may be switched on, to take all the current out of the coils, so that the motor is stopped. Or a sequence between a reduced voltage or current vector and an increased voltage or current vector might be applied for trying to resolve the stall condition.

FIG. 4 shows the electric angle (in electric degrees) in function of time (in seconds) before and after stall for a motor running at 200 e-rpm. The stall threshold value which can be used in this example is 2,66 e-deg.

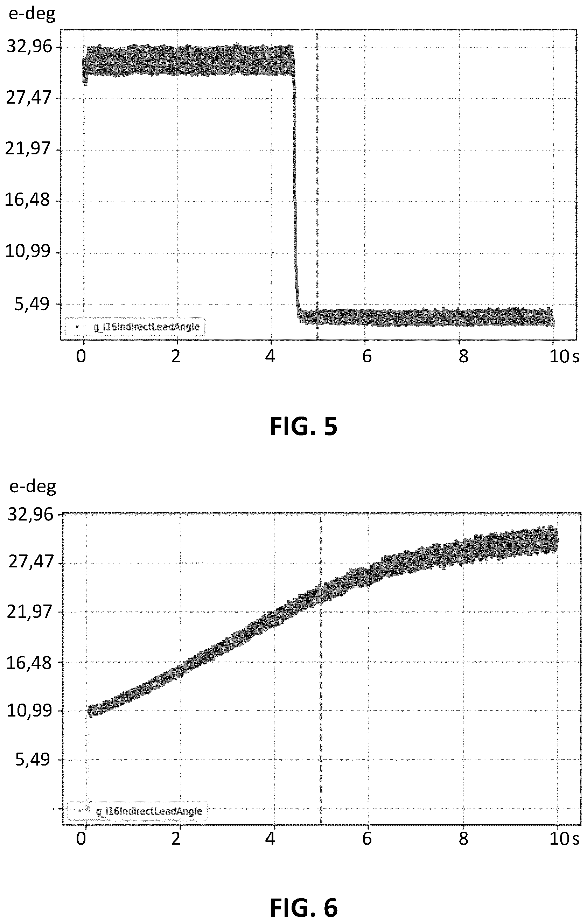

FIG. 5 shows the electric angle (in electric degrees) in function of time (in seconds) before and after stall for a motor running at 1000 e-rpm. The stall threshold value which can be used in this example is 4,91 e-deg.

FIG. 6 shows the electric angle (in electric degrees) in function of time (in seconds) during ramp-up. In embodiments of the present invention the method or the device is configured such that during ramp-up no stall is triggered. The enabling function may be implemented in the processing device of the stall detector. It may for example be used when starting the motor from zero speed and driving the motor in a non-optimal way. Once the rotor has obtained a certain minimum speed, such that the difference between the IV-angle and the stall threshold becomes larger than the noise of the measurement, the stall detection can be enabled for either constant speed operation, acceleration or deceleration.

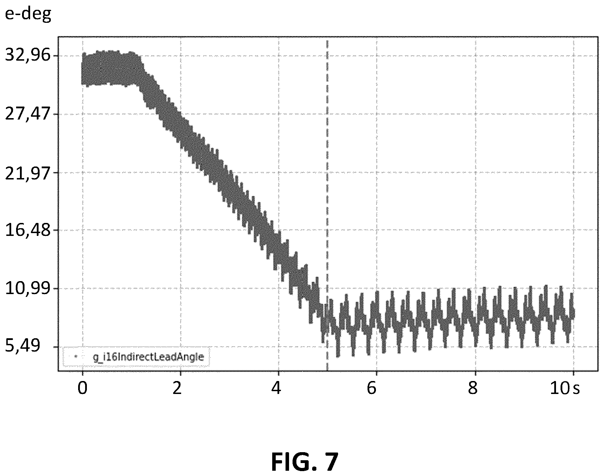

FIG. 7 shows the electric angle (in electric degrees) in function of time (in seconds) during ramp-down. In embodiments of the present invention the method or the device is configured such that during ramp-down no stall is triggered. The processing device of the stall detector may be configured for disabling the stall detection such that no stall is indicated during ramp down.

The graphs in FIG. 4 and 5 illustrate the electric angle for a motor which is driven in a non-optimal way. In these cases, the electric angle will not be lower than the stall threshold, thus not causing a stall to trigger. When a change in torque does cause a stall trigger and it was not a real stall, then the torque change made the motor to operate very close to the optimal point, meaning that it operate very close to the stability edge. Operating a motor in open loop close to this stability edge has a big risk of causing oscillations, which usually lead to stalls. Therefore it is advantageous that, in embodiments of the present invention, the motor is stopped or restarted when this happens.

**Claims**

1. A method (100) for detecting stall of a rotor of a brushless DC motor (220) comprising one or more motor phases with for each motor phase a phase inductance L, and a phase resistance R, the method (100) comprising:

   - driving (110) the brushless DC motor (220) by applying a voltage vector or a current vector to one or more motor phases of the brushless DC motor (220) with a rotation speed $\omega$ of the voltage vector or the current vector, for rotating said rotor,
   - obtaining (120) an electric angle between the applied voltage vector and a resulting current vector of the one or more motor phases or between the applied current vector and a resulting voltage vector of the one or more motor phases,

- comparing (130) the absolute value of the electric angle or a filtered version thereof with a stall threshold value and indicating (140) a stall of said rotor if the absolute value of the electric angle or a filtered version thereof crosses the stall threshold value wherein the stall threshold value is *arctan2(ωL, R)* plus or minus a predefined margin.

2. A method (100) according to claim 1 wherein a stall of said rotor is indicated (140) if the absolute value of the electric angle or a filtered version thereof becomes smaller than the stall threshold value.

3. A method (100) according to any of the previous claims wherein the predefined margin is a positive value between 0 and 50% of the arctan2(ωL, R).

4. A method (100) according to claim 1 wherein a stall of said rotor is indicated (130) if the absolute value of the electric angle or a filtered version thereof is within a range defined by *arctan*2(ωL, R) plus/minus the predefined margin.

5. A method (100) according to claim 4 wherein the predefined margin is a positive value between 0.1 and 50% of the *arctan*2(ωL, R).

6. A method (100) according to any of the previous claims wherein the motor is driven (110) in an open loop manner.

7. A method (100) according to any of the previous claims wherein the motor (220) is driven (110) such that, while the rotor is rotating, the absolute version of the electric angle or a filtered version thereof is larger than the stall threshold value.

8. A method (100) according to claim 7, the method comprising an enabling step when starting the motor wherein the absolute value of the electrical angle or a filtered version thereof is compared with an enable threshold value and the indicating of a stall of said rotor is only enabled when absolute value of the electrical angle or a filtered version thereof is larger than the enable threshold value, wherein the enable threshold value is larger than the stall threshold value.

9. A method (100) according to any of the previous claims, the method comprising stopping the driving (110) of the brushless DC motor if stall is indicated (130).

10. A method (100) according to any of the previous claims 1 to 8, the method comprising applying a reduced voltage vector or a reduced current vector during a predefined duration if stall is indicated (130).

11. A stall detector (210) for detecting stall of a brushless DC motor comprising one or more motor phases with for each motor phase a phase inductance L, and a phase resistance R, the stall detector comprising:

- a driver (213, 230) configured for driving (110) the brushless DC motor (220) by applying a voltage vector or a current vector to one or more motor phases of the brushless DC motor (220) with a rotation speed ω of the voltage vector or the current vector, for rotating said rotor,
- a detector (212) configured for obtaining (120) an electric angle between the applied voltage vector and a resulting current vector of the one or more motor phases or between the applied current vector and a resulting voltage vector of the one or more motor phases,
- a processing device (211) configured for determining a stall of said rotor if the absolute value of the electric angle or a filtered version thereof crosses a stall threshold value wherein the stall threshold value is *arctan2(ωL, R)* plus or minus a predefined margin and for indicating said stall.

12. A stall detector (210) according to claim 11 wherein the processing device (211) is configured for determining a stall of said rotor if the absolute value of the electric angle or a filtered version of the electric angle becomes smaller than the stall threshold value.

13. A stall detector (210) according to claim 11 wherein the processing device (211) is configured for determining a stall of said rotor if the absolute value of the electric angle or a filtered version thereof is within a range defined by the *arctan2(ωL, R)* plus/minus the predefined margin.

14. A stall detector (210) according to any of the claims 11 to 13 wherein the driver (213, 230) is configured for driving the motor in an open loop manner.

15. A stall detector (210) according to any of the claims 11 to 14 wherein the driver (213, 230) is configured for driving the motor (220) such that, while the rotor is rotating, the absolute value of the electric angle or a filtered version thereof is larger than the stall threshold value.

100

While driving 110 a BLDC motor

120      -   Obtaining voltage-current angle

130      -   Comparing angle with threshold $arctan2(\omega L, R)$

140      -   Indicating stall if detected

# FIG. 1

200

210

211

VSM

212

213

220

230

231

UVW

# FIG. 2

**FIG. 3**

**FIG. 4**

**FIG. 5**

**FIG. 6**

e-deg

**FIG. 7**

**EP 4 572 123 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 826 170 A1 (MELEXIS TECHNOLOGIES NV [BE]) 26 May 2021 (2021-05-26) | 1-9, 11-15 | INV. H02P6/18 |
| Y | * figures 1,2 * <br> * claims 1-11 * <br> * paragraphs [0004], [0102] * <br> * the whole document * | 10 | H02P29/02 <br> H02P6/21 |
| X | Ilker Sahin: "Measurement of brushless dc motor characteristics and parameters and brushless dc motor design", MS thesis, 1 January 2010 (2010-01-01), pages 1-219, XP093159637, Retrieved from the Internet: URL:https://open.metu.edu.tr/bitstream/handle/11511/19315/index.pdf | 1 | |
| A | * page 58 - page 61 * <br> * figure 3.24 * | 2-15 | |
| Y | US 5 744 921 A (MAKARAN JOHN E [CA]) 28 April 1998 (1998-04-28) * column 10, line 66 - column 11, line 13 * | 10 | |
| A | EP 2 689 529 B1 (TECHNELEC LTD [GB]) 25 October 2017 (2017-10-25) * the whole document * | 1-15 | |
| A | US 2020/169213 A1 (PARK CHOONG SEOB [KR]) 28 May 2020 (2020-05-28) * figure 4 * * the whole document * | 1-15 | |

**TECHNICAL FIELDS SEARCHED (IPC)**

H02P

The present search report has been drawn up for all claims

| Place of search | Date of completion of the search | Examiner |
|---|---|---|
| Munich | 14 May 2024 | Koteich, Mohamad |

EPO FORM 1503 03.82 (P04C01)

EP 4 572 123 A1

## ANNEX TO THE EUROPEAN SEARCH REPORT
## ON EUROPEAN PATENT APPLICATION NO.

EP 23 21 6523

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | | Publication date | Patent family member(s) | | Publication date |
|---|---|---|---|---|---|
| EP 3826170 | A1 | 26-05-2021 | NONE | | |
| US 5744921 | A | 28-04-1998 | CN | 1223029 A | 14-07-1999 |
| | | | DE | 69727477 T2 | 25-11-2004 |
| | | | EP | 0896760 A1 | 17-02-1999 |
| | | | JP | 2000509598 A | 25-07-2000 |
| | | | KR | 20000010713 A | 25-02-2000 |
| | | | TW | 338855 B | 21-08-1998 |
| | | | US | 5744921 A | 28-04-1998 |
| | | | WO | 9742701 A1 | 13-11-1997 |
| EP 2689529 | B1 | 25-10-2017 | EP | 2689529 A2 | 29-01-2014 |
| | | | GB | 2489434 A | 03-10-2012 |
| | | | JP | 5866429 B2 | 17-02-2016 |
| | | | JP | 2014513911 A | 05-06-2014 |
| | | | KR | 20140024331 A | 28-02-2014 |
| | | | US | 2014084821 A1 | 27-03-2014 |
| | | | WO | 2012131344 A2 | 04-10-2012 |
| US 2020169213 | A1 | 28-05-2020 | CN | 111211729 A | 29-05-2020 |
| | | | DE | 102019117818 A1 | 28-05-2020 |
| | | | KR | 20200059849 A | 29-05-2020 |
| | | | US | 2020169213 A1 | 28-05-2020 |

EPO FORM P0459

For more details about this annex : see Official Journal of the European Patent Office, No. 12/82